# EUROPEAN PATENT APPLICATION

(11) **EP 1 085 616 A1**
(43) Date of publication of application: **21.03.2001**
(21) Application number: 00120495.7
(22) Date of filing: 20.09.2000
(51) Int. Cl.: H01R 13/635

(54) **Connector assembly with ejector**

(30) Priority: 20.09.1999 JP 26539799
(71) Applicant: MOLEX INCORPORATED, Lisle Illinois 60532 (US)
(72) Inventor: Hirata, Toshihisa, Yamato, Kanagawa (JP)
(74) Representative: Kampfenkel, Klaus, Dipl.-Ing.

(57) **Abstract**

Disclosed is a connector assembly (1) for receiving card medium (60) having card contacts (61) on a front side thereof. The connector assembly comprises a header (20) having terminals (24) for making electrical connections with the card contacts of the card medium and an ejector unit (40) for ejecting the card from the header. The ejector unit (40) comprises a spring-biased actuator (41) responsive to insertion of the card into the header for applying an ejecting force to the card, at least one rotary piece (47) having notches (48) and contours (49) on opposite ends, the rotary piece (47) being rotatably fixed to the actuator (41); and a latching mechanism comprising stationary cam projections (50) and (51) confronting each other to allow the rotary piece (47) to move from one to the other cam projection, such that each cam projection follows the notches (48) and contours of one end of the rotary piece, thereby causing the rotary piece to turn and lock the actuator when one of the cam projections catches one end of the rotary piece.

## Description

### Field of the Invention:

The present invention relates to a connector assembly which permits a card device, such as a PCMCIA card, compact flash card or other card medium (hereinafter referred to as "card") to be connected to an associated printed circuit.

### Background of the Invention:

Known card connector assemblies are so designed to accommodate a card having a plurality of contacts arranged on a front side thereof, and the terminals of the connector assembly, which are soldered to selected conductors of a printed circuit board, make contact with the contacts of the card, thereby making an electrical connection between the card and the printed circuit board. The connector typically comprises a header having a plurality of terminals corresponding to the contacts of the card and an ejector unit for ejecting the card from the header. Known ejector units use a heart-shaped cam and a cam follower in the form of rod, which projects from the actuator such that rotation of the heart-shaped cam causes the actuator to move through the agency of the rod projection in a controlled fashion.

Such an ejector unit is complex in structure and uses many component parts and is therefore relatively costly. Furthermore, the component parts function in a friction-type of operation and therefore are liable to be worn, causing undesired debris to be produced.

### Summary of the Invention:

One object of the present invention is to provide a connector assembly which is relatively simple in structure and does not operate by way of friction, thereby minimizing any such defects that may be produced from friction-operating parts.

To attain this object a connector assembly for making an electric connection with a memory card or any other platelike medium having a plurality of contacts arranged on its front side, comprising a header having a corresponding plurality of terminals to make electric connections with the contacts of the memory card or plate-like medium and an ejector unit for ejecting the card or plate-like medium from the header is improved according to the present invention in that the ejector unit comprises: a spring-biased actuator responsive to insertion of the card or plate-like medium into the header for applying an ejecting force to the card or plate-hke medium with the aid of an associated spring; at least one notched rotary piece having notches made on its opposite ends, the rotary piece being rotatably fixed to the actuator; and a latching mechanism comprising stationary cam projections confronting each other to allow the rotary piece to move from one to the other cam projection or vice versa, permitting each cam projection to follow the notched section and selected contour section of one or the other end of the rotary piece, thereby making the rotary piece to turn and lock the actuator with one of the cam projections catching one or the other end of the rotary piece.

The so constructed connector assembly is simple in structure, not using any frictional parts sliding over another like a heart-and-rod cam mechanism, thus producing no debris.

The ejector unit may further comprise means for resiliently urging the rotary piece against the actuator.

The ejector unit may further comprise means responsive to arrival of the rotary piece at selected angular positions for clicking.

The ejector unit may be adapted to be integrally connected to the header.

The ejector unit may have two or more sets of rotary piece-and-cam projections.

Other objects and advantages of the present invention will be understood from the following description of a connector assembly according to preferred embodiments of the present invention, which are shown in accompanying drawings.

### Brief Description of the Drawings

The features of the invention which are believed to be novel are set forth with particularity in the appended claims. The invention, together with its objects and the advantages thereof, may be best understood by reference to the following description taken in conjunction with the accompanying drawings, in which like reference numeral identify like elements in the figures and in which:
FIGURE 1 is an exploded perspective view of a connector assembly according to one embodiment of the present invention;
FIGURE 2 is a sectional view of a portion of the connector assembly;
FIGURE 3 is an enlarged front end view of the ejector unit;
FIGURE 4 is an enlarged pian view of the ejector unit;
FIGURE 5 is a similar plan view, showing the casing in phantom lines;
FIGURE 6 illustrates how the ejector components function;
FIGURE 7 illustrates the bending of the rotary piece to provide the resilient effect on the rotary piece;
FIGURE 8 is a perspective view of another example of rotary piece, which has resilient risers formed thereon;
FIGURE 9 is a perspective view of one example of actuator, which has resilient risers fixed thereto;
FIGURE 10 is a perspective view of still another example of rotary piece, which has a funnel-shaped aperture made therein;
FIGURE 11 is an enlarged sectional view of a fragment of the actuator, which is so constructed as to click in response to arrival at selected angular positions;
FIGURE12 is an enlarged plane view of the actuator of Figure 11, showing the casing in phantom lines;
FIGURE13 is an enlarged side view of the actuator of Figure 11;
FIGURE14 is an enlarged end view of a connector assembly using two sets of rotary piece-and-cam projections parallel-arranged in the ejector unit; and
FIGURE15 is an enlarged plan view of the connector assembly of Figure 14, showing the casing in phantom lines.

### Description of Preferred Embodiments:

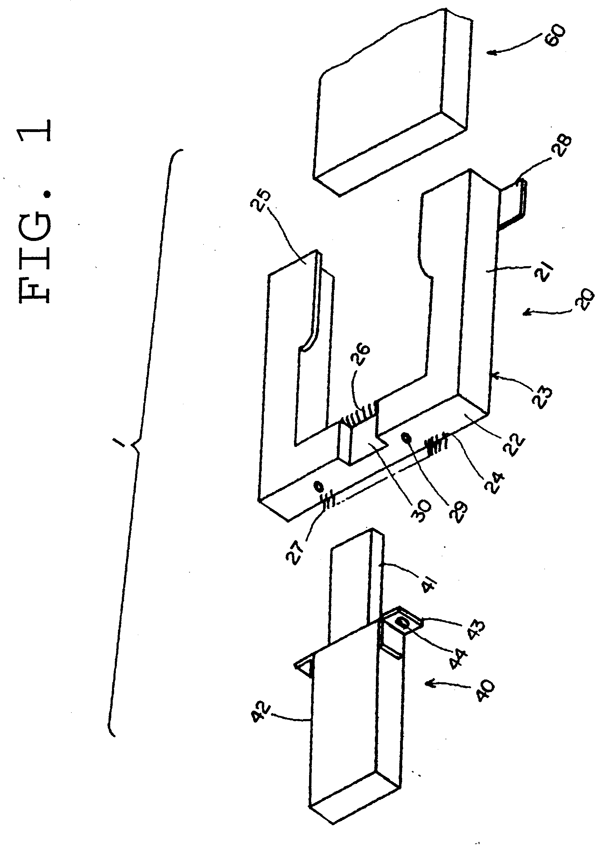

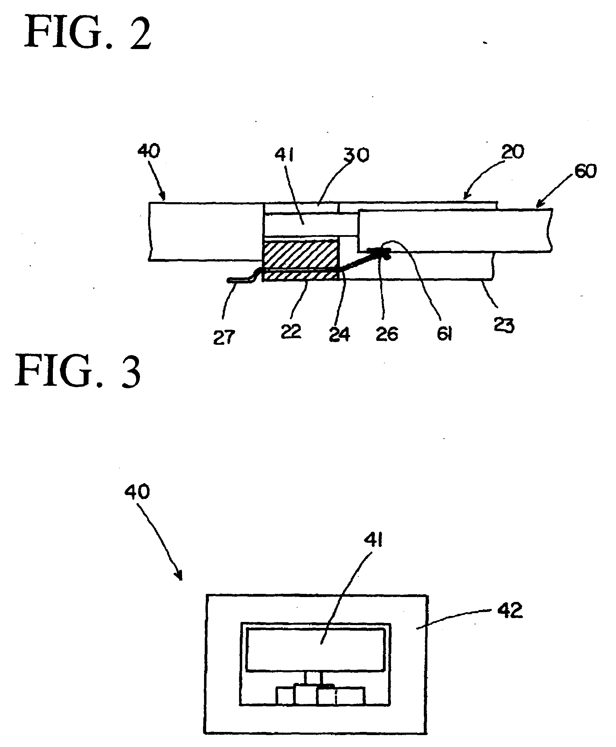

Figure 1 shows a connector assembly 1 for receiving an electronic memory card or other plate-like medium 60, which medium has a plurality of contacts 61 arranged a front side thereof. The connector assembly 1 comprises a header 20 having a corresponding plurality of terminals 24 to make contact with card contacts 61 of card 60 and an ejector unit 40 for ejecting the card from header 20. Header 20 includes a "U"-shaped insulating housing 23, which is composed of a lateral section 22 and two opposite longitudinal sections 21 integrally connected to opposite ends of lateral section 22. Lateral section 22 includes terminals 24 arranged at regular intervals and mounted therein, as shown in Fig 2.

Opposite longitudinal sections 21 are spaced from each other a distance approximately equal to the width of card 60, thus serving to guide card 60 during insertion into header 20. Still referring to Figure 1, longitudinal sections 21 have an inward projection 25 integrally connected to an upper rear end. Referring to Figure 2, each terminal 24 has a contact end 26 formed on one end and a solder tail 27 formed on the other end. Contact end 26 of terminal 24 contacts a corresponding card contact 61 on the front edge of card 60. The intermediate section of each terminal is embedded in lateral section 22 of housing 23 by overmolding (shown) or stitching. As seen in Figure 1, each longitudinal section 21 has a plate-like stay 28 or fitting nail fixed to a lower end thereof. The horizontal piece of fitting nail 28 is coplanar with solder tails 27 of terminals 24, permitting header 20 to be fixed to an underlying printed circuit board (not shown) by soldering the solder tails of the terminals to corresponding conductors of the printed circuit board.

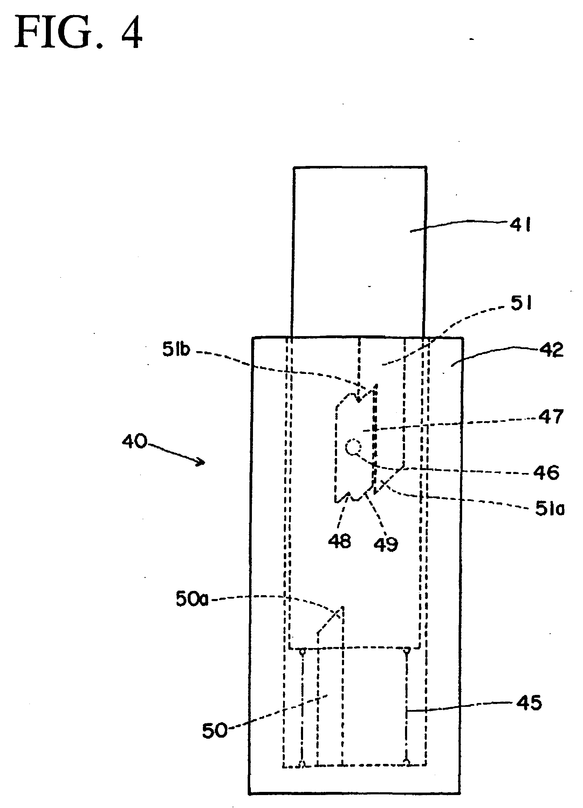

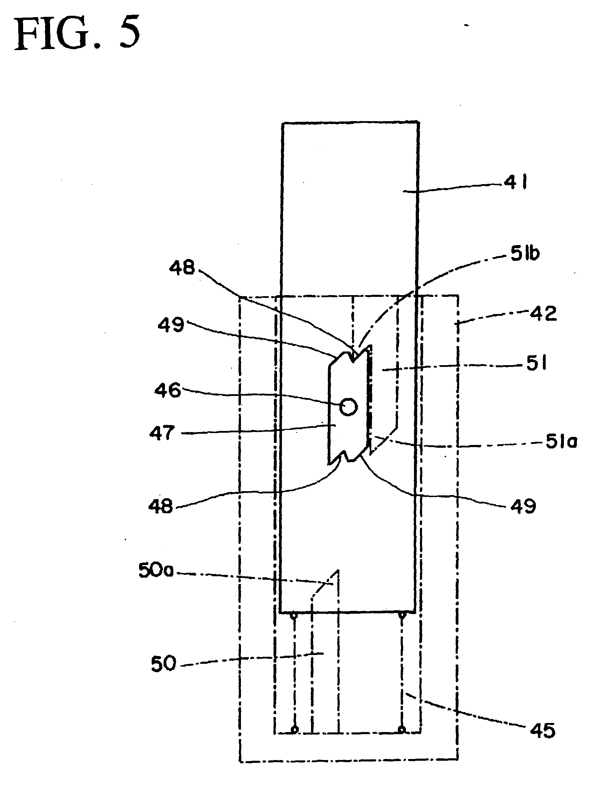

Looking now to Figures 4 and 5, ejector unit 40 comprises a spring-biased actuator 41, a notched rotary piece 47 and a latching mechanism, as later described in detail. Actuator 41 projects from box-like casing 42, and is responsive to insertion of card 60 into header 20 such that it applies a constant ejecting force to card 60 with the aid of a spring 45 positioned on the bottom of box-like casing 42. Casing 42 has "L"-shaped fastening metals 43 fixed to its front opposite sides. These fastening metals 43 have holes 44 made in their lateral flaps, and lateral section 22 of header 20 has counter tapped holes 29 on its front side. When casing 42 is applied to the front side of lateral section 22 of header 20 with projecting actuator 41 slidably-fitted in a center notch 30 of lateral section 22, holes 44 of fastening metals 43 are in alignment with tapped holes 29 of lateral section 22, thus permitting ejector unit 40 to be integrally connected to header 20 with screws (not shown). When ejector unit 40 is fixed to the front side of lateral section 22 of header 20, actuator 41 extends beyond lateral section 22, toward an inserted card.5

Referring to Figures 3 to 5, actuator 41 has a notched rectangular rotary piece 47 rotatably fixed about a pivot stud 46 on its upper surface. Rotary piece 47 has notches 48 and slants 49 made on its opposite short sides. These notch-and-slant contours are symmetric with respect to pivot stud 46.

Stationary cam projections 50 and 51 are fixed on an upper surface of casing 42 in confronting relation with the notch-and-slant contours of the opposite short sides of rotary piece 47 when rotary piece 47 is in alignment with the longitudinal center axis of casing 42. One of the cam projections 51 is positioned close to the opening side of casing 42, and the other, second cam projection 50 is positioned close to the bottom of casing 42. The second cam projection 50 has an inclined "V"-shaped end 50a, which is directed to rotary piece 47. The first cam projection 51 has two inclined "V"-shaped sections 51a and 51b staggered along its longitudinal axis. These inclined "V"-shaped sections 51a and 51b of cam projection 51 are directed to rotary piece 47. Each inclined "V"-shape has an angle somewhat smaller than the corresponding "V-shaped notch 48 of each short side or end of rotary piece 47.

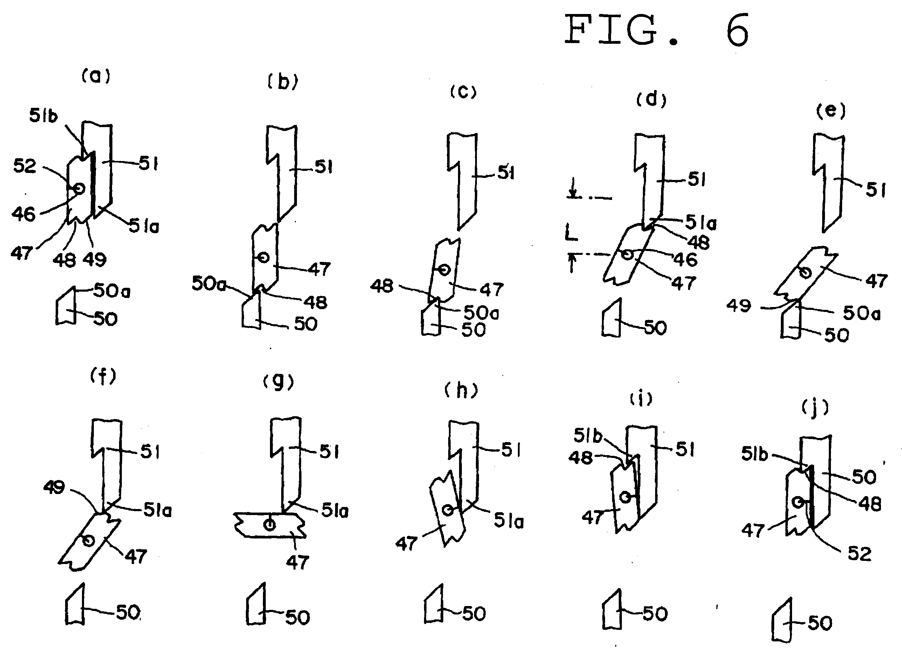

Referring to Figures 6a through 6j, the manner in which cam projections 50 and 51 catch, release and rotate rotary piece 47 for latching and unlatching actuator 41 is now described.

In an initial position, first notch 48 of rotary piece 47 is caught by trailing "v"-shape 51b (Figure 6a), allowing actuator 41 to extend a maximum distance from casing 42 while actuator 41 is held in this position under the influence of spring 45. When actuator 41 is pushed into casing 42 by applying an external force to actuator 41, rotary piece 47 moves away from first cam projection 51, and moves toward second cam projection 50 (Figure 6b). When second notch 48 of rotary piece 47 abuts "V"-shaped end 50a of second cam projection 50, rotary piece 47 turns slightly clockwise(Figure 6c), and actuator 41 is caused to stop, projecting a minimum distance from casing 42. Actuator 41 is held in this position as long as the external pushing force is applied.

Cessation of the pushing force applied to actuator 41 allows actuator 41 to move outward under the influence of spring 45 (Figure 6d). Specifically, rotary piece 47 gets close to first cam projection 51 such that first "V'-shaped notch 48 of rotary piece 47 abuts on "V"-shape 51a of first cam projection 51, thereby causing rotary piece 47 to turn slightly clockwise about pivot 46. In this latching position actuator 41 is caused to stop (Figure 6d) allowing actuator 41 to extend a distance slightly longer than the minimum distance from casing 42 (the minimum distance plus the backlash distance). Actuator 41 is held in this position, where actuator 41 is withdrawn a distance "L" apart from the initial position shown in Figure 6a.

When actuator 41 is pushed into casing 42 from the position shown in Figure 6d, rotary piece 47 moves toward second cam projection 50 in the state of being somewhat inclined, and therefore "v"-shaped end 50a of second cam projection 50 is in contact with one longitudinal side of rotary piece 47 without being caught by the "V"-shaped notch of the other short side or second end of rotary piece 47, thus causing rotary piece 47 to turn slightly clockwise. Cessation of the pushing force applied to actuator 41 allows actuator 41 to project further from casing 42. Figures 6f through j show how rotary piece 47 and counter cam projection 51 operate and interengage after removal of the external force.

Still referring to Figures 6f through 6j, actuator 41 causes rotary piece 47 to move toward first cam projection 51, allowing slant section 49 of the first notched end of rotary piece 47 to be put in contact with"V"-shape 51a of first cam projection 51, thereby causing rotary piece 47 to turn slightly clockwise (Figure 61). Then, "V"-shape 51a of first cam projection 51 follows the other longitudinal side of rotary piece 47, thus causing rotary piece 47 to turn clockwise a greater distance (Figures 6g and 6h). Thus, the second notched end of rotary piece 47 confronts trailing "V" shape 51b of first cam projection 51 (Figure 6i). Finally"V"-notch 48 of the second notched end of rotary piece 47 is caught by trailing "V"-shape 51b of first cam projection 51 so that actuator 41 is prevented from advancing and projecting further from casing 42 (Figure 6j).

Rotary piece 47 therefore rotates 180 degrees from the initial position shown in Figure 6a to the final position shown in Figure 6j, as is shown by reference mark 52 on rotary piece 47 (Figure 6a and 6j). Actuator 41 follows sequential positions as shown in Figures 6a to 6d, advancing, withdrawing and advancing again in Figure 6d. Every time actuator 41 advances and withdraws, rotary piece 47 turns 180 degrees.

When card 60 is inserted into header 20, actuator 41 moves from its projecting position 6a to its withdrawn position 6d by compressing spring 45, and actuator 41 is locked in its withdrawn position 6d, where card 60 is held with its card contacts 61 in contact with contact ends 26 of terminals 24.

When card 60 is inserted into header 20, rotary piece 47 follows sequential positions as shown in Figures 6a to 6d to latch the actuator in the position shown in Figure 6d. When card 60 is pushed slightly toward ejector unit 40, rotary piece 47 moves as shown in Figures 6e through 6j, allowing actuator 41, urged continuously by spring 45, to push and eject card 60.

In connector assembly 1, actuator 41 is described above as being rotatably attached to the stud pivot 46 of the actuator 41, but the rotary piece 47 may have a pivot axle 46 integrally connected thereto, and the actuator 41 may have a bearing hole made at its center for accommodating the pivot axle 46 of the rotary piece 47.

Rotary piece 47 may be pushed against actuator 41 by applying a resilient force to rotary piece 47 in the direction parallel to its pivot, thereby assuring that rotary piece 47 is applied to cam projection 50 or 51 in stable condition, and that rotary piece 47 is prevented from turning except for rotation as a counter action to abutting either cam projection.

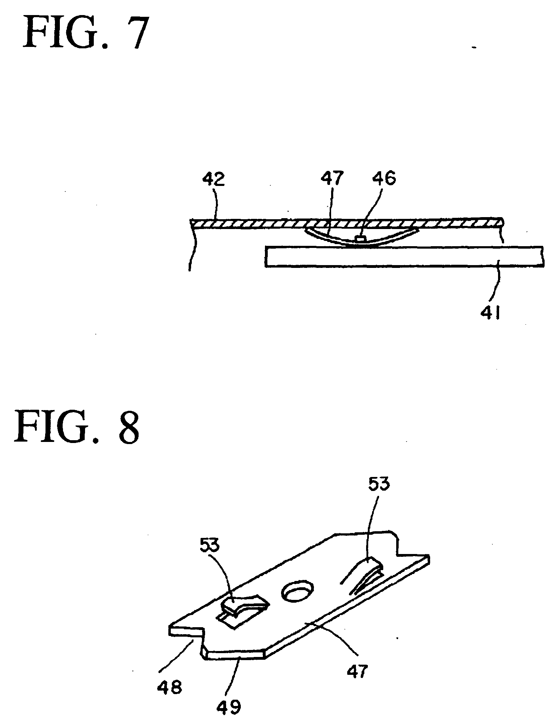

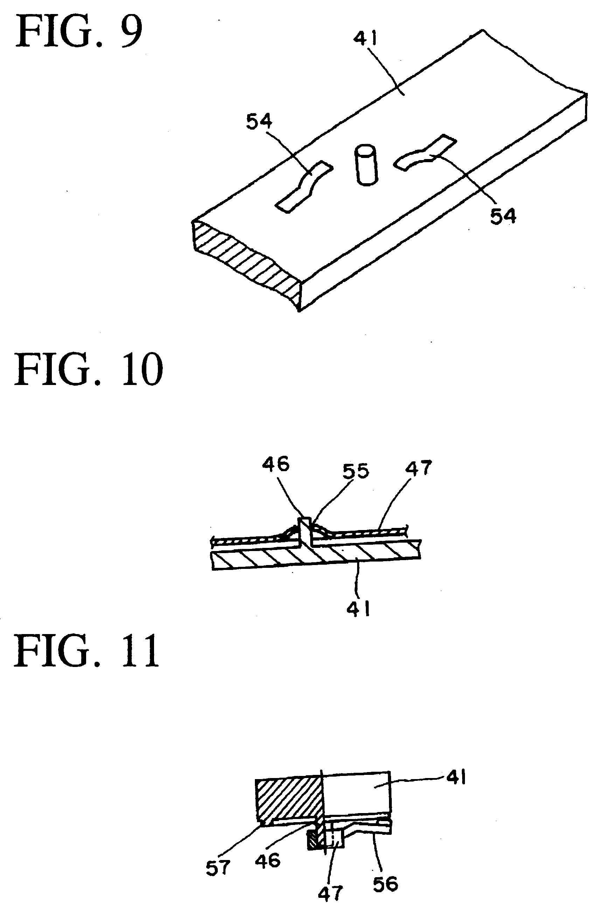

Rotary piece 47 can take on different forms in order to perform its function. Referring to Figure 7, rotary piece 47 may be bent so that it can be resiliently pushed against an upper surface of casing 42. Figure 8 shows an example in which rotary piece 47 has resilient risers 53 cut and raised from an upper surface thereof. Figure 9 shows actuator 41 having inclined resilient pads 54 fixed to an upper surface thereof.

Figure 10 shows rotary piece 47 having a funnel-like hole 65 made therein. When the stud pivot 46 of actuator 41 is inserted into funnel-like hole 55 of rotary piece 47, rotary piece 47 exerts a resilient force against an inside upper surface of casing 42.

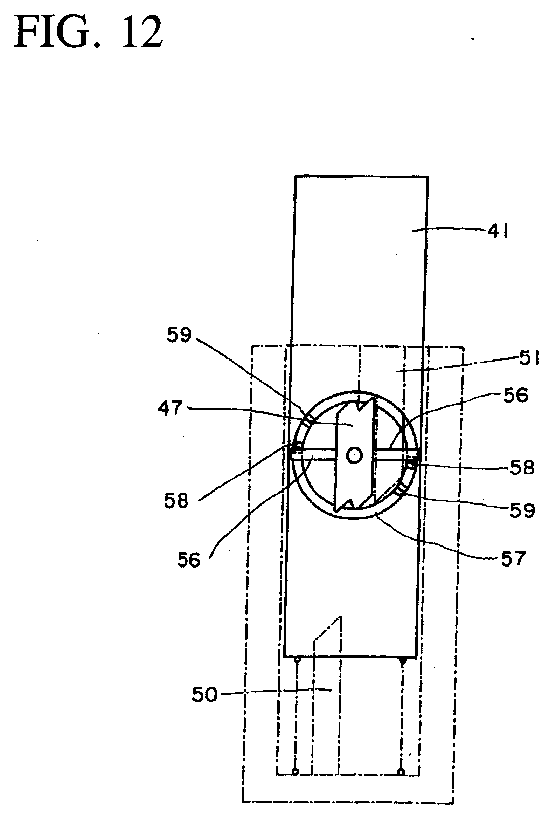

Referring to Figures 11 through 13, rotary piece 47 has two resilient arms 56 extending from opposite longitudinal sides, allowing their contact ends to slide on an annular projection 57 which has recesses 58 and 59 at selected angular positions, and is formed on an upper surface of actuator 41.

Recesses 58 and 59 are located at angular positions corresponding to the position of arms 56 when rotary piece 47 and counter cam projection 51 are in the position shown in Figure 6c whereas recesses 58 and 59 are located at angular positions corresponding to the position of arms 56 when rotary piece 47 and counter cam projection 51 are in the position shown in Figure 6e. Thus, when card 60 is inserted in casing 42, and when card 60 is ejected, connector assembly 1 produces an audible "click".

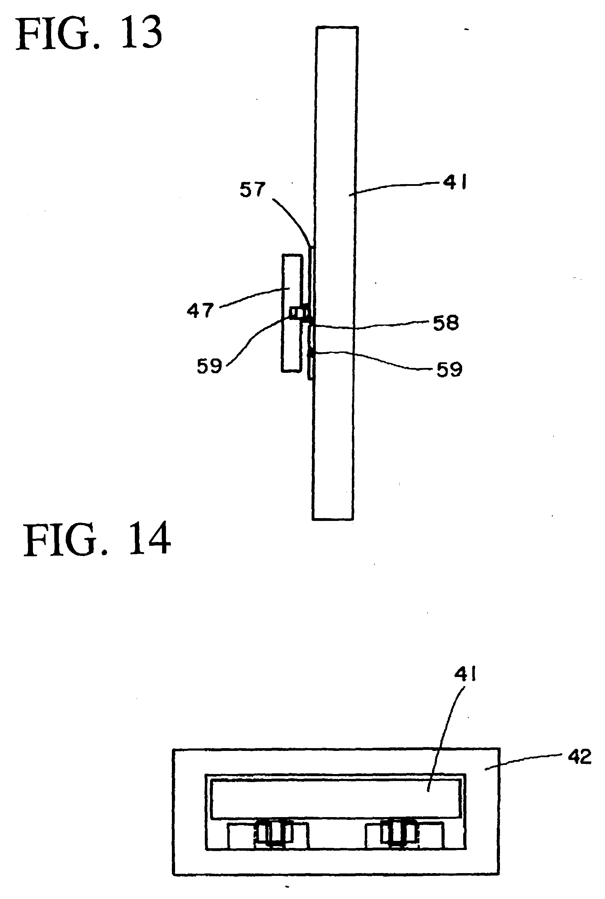

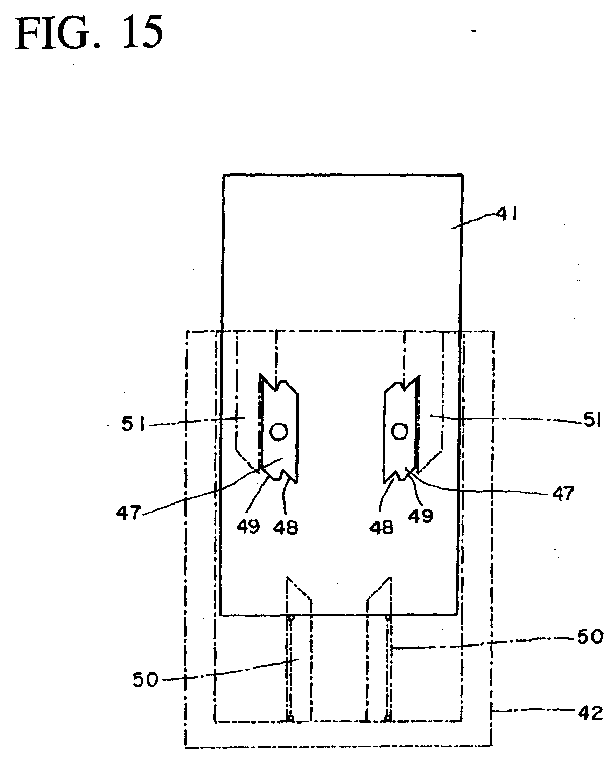

Referring to Figures 14 and 15, a connector assembly according another embodiment of the present invention uses a pair of rotary pieces 47. These rotary pieces 47 are arranged symmetrically with respect to the longitudinal center line of the connector assembly, and are fixed to an actuator 41. Two sets of cam projections 50 and 51 are arranged symmetrically with respect to the longitudinal center line, and are fixed to an upper inside surface of a casing 42. In some applications, a connector assembly using only a single rotary piece 47 may result in a lateral force being produced in a direction perpendicular to the direction actuator 41 is moved. In such applications, this effect can be prevented in the connector assembly shown in Figure 14 where two rotary pieces are used.

Ejector unit 40 is described and shown as being joined to header 20. Ejector unit 40 may also be bolted to a stationary board which is fixed to header 20. In any event ejector unit 40 and header 20 are separate parts, permitting substitution or replacement by new parts when necessary. Furthermore, these parts can be easily standardized.

Based upon the foregoing description, it is apparent that the connector assembly of the invention is simple in structure. Furthermore, with the latching mechanism being constructed as described, the number of component parts required for the connector assembly is minimized. The connector assembly has no frictional parts other than cam projections 50 and 51 and rotary piece 47, causing little or no debris during functioning.

It will be understood that the invention may be embodied in other specific forms without departing from the spirit or central characteristics thereof. The present examples and embodiments, therefore, are to be considered in all respects as illustrative and not restrictive, and the invention is not to be limited to the details given herein.

## Claims

1. A connector assembly (1) for receiving card medium (60) with a plurality of card contacts (61) arranged on a front side thereof comprising:
a header (20) having a plurality of terminals (24) for making an electrical connection with the card contacts (61), and
an ejector unit (40) for ejecting the card medium (60) from the header (20)
characterized in that
the ejector unit (40) comprises:
a spring-biased actuator (41) responsive to insertion of the card medium (60) into the header (20) for applying an ejecting force to the card medium (60) with the aid of a spring (45);
at least one notched rotary piece (47) having a notch (48) and a contour piece (49) on each opposite end of the rotary piece, the rotary piece (47) being rotatably fixed to the actuator (41); and
a latching mechanism comprising two stationary cam projections (50, 51) confronting each other to allow the rotary piece (47) to move from one to the other cam projection, wherein each cam projection corresponds in shape to the notch (48) and contour piece at each end of the rotary piece (47) such that the rotary piece (47) turns and locks the actuator (41) when one of the cam projections catches one end of the rotary piece (47).

2. A connector assembly (1) according to claim 1 wherein the ejector unit (40) further comprises means for resiliently urging the rotary piece (47) against the actuator (41).

3. A connector assembly (1) according to claim 1 or 2 wherein the ejector unit (40) further comprises audible means responsive to arrival of the rotary piece (47) at selected angular positions.

4. A connector assembly according to claim 1 wherein the ejector unit (40) is adapted to be integrally connected to the header (20).

5. A connector assembly according to claim 1 wherein the ejector unit (40) has two or more sets of rotary piece and cam projections.
